# EUROPEAN PATENT APPLICATION

(11) **EP 4 333 333 A1**
(43) Date of publication of application: **06.03.2024**
(21) Application number: 21943560.9
(22) Date of filing: 03.06.2021
(51) Int. Cl.: H04L 1/00, H04L 25/00

(54) **TRANSMITTER, RECEIVER, PARAMETER ADJUSTMENT METHOD, SERDES CIRCUIT AND ELECTRONIC DEVICE**

(71) Applicant: Huawei Technologies Co., Ltd., Shenzhen, Guangdong 518129 (CN)
(72) Inventor: ZHANG, Bingzhao, Shenzhen, Guangdong 518129 (CN); CHEN, Yanqin, Shenzhen, Guangdong 518129 (CN); QIAN, Zhaohua, Shenzhen, Guangdong 518129 (CN); CHEN, Hangzhou, Shenzhen, Guangdong 518129 (CN); KE, Jiandong, Shenzhen, Guangdong 518129 (CN); WANG, Guizhen, Shenzhen, Guangdong 518129 (CN); TAN, Lijuan, Shenzhen, Guangdong 518129 (CN)
(74) Representative: Pfenning, Meinig & Partner mbB
(86) International application number: PCT/CN2021/098212
(87) International publication number: WO 2022/252197

(57) **Abstract**

This application relates to the communication field, and discloses a transmitting apparatus, a receiving apparatus, a parameter adjustment method, a SerDes circuit, and an electronic device, to reduce a time required for adjusting a transmission parameter A transmitting apparatus includes a signal generation circuit and an adjustment circuit. The signal generation circuit is configured to send, to a receiving apparatus, a serial data signal that carries a training sequence or valid data, where the training sequence is used to train a skew or an equalization of the serial data signal, and the valid data is used to detect an amplitude of the serial data signal. The adjustment circuit is configured to: receive indication information from the receiving apparatus, and adjust a transmission parameter of the serial data signal based on the indication information, where the transmission parameter includes at least one of the skew, the equalization, or the amplitude of the serial data signal.

## Description

### TECHNICAL FIELD

This application relates to the field of communications, and in particular, to a transmitting apparatus, a receiving apparatus, a parameter adjustment method, a serializer/deserializer (serializer/deserializer, SerDes) circuit, and an electronic device.

### BACKGROUND

A SerDes technology is a point-to-point serial communication technology using time-division multiplexing. Before a SerDes technology-based transmitting apparatus (transmitter, TX) and receiving apparatus (receiver, RX) formally exchange data, the transmitting apparatus sends a training sequence to the receiving apparatus, to train a transmission parameter of a serial data signal, so as to optimize a bit error rate of data transmission.

However, currently, it takes a relatively long time for the transmitting apparatus and the receiving apparatus to adjust the transmission parameter based on the training sequence, and the training may fail. Consequently, data transmission cannot be quickly started.

### SUMMARY

Embodiments of this application provide a transmitting apparatus, a receiving apparatus, a parameter adjustment method, a SerDes circuit, and an electronic device, to reduce a time required for adjusting a transmission parameter.

To achieve the foregoing objective, the following technical solutions are used in embodiments of this application.

According to a first aspect, a transmitting apparatus is provided, including a signal generation circuit and an adjustment circuit. The signal generation circuit is configured to send, to a receiving apparatus, a serial data signal that carries a training sequence or valid data, where the training sequence is used to train a skew or an equalization of the serial data signal, and the valid data is used to detect an amplitude of the serial data signal. The adjustment circuit is configured to: receive indication information from the receiving apparatus, and adjust a transmission parameter of the serial data signal based on the indication information, where the transmission parameter includes at least one of the skew, the equalization, or the amplitude of the serial data signal.

According to the transmitting apparatus provided in this embodiment of this application, the transmitting apparatus sends a serial data signal to a receiving apparatus. The serial data signal may carry a training sequence or valid data. The training sequence may be used to train a skew or an equalization of the serial data signal, and the valid data may be used to detect an amplitude of the serial data signal. The transmitting apparatus receives indication information from the receiving apparatus, where the indication information indicates the transmitting apparatus to adjust a transmission parameter (including at least one of the skew, the equalization, and the amplitude of the serial data signal), and the receiving apparatus may adjust the transmission parameter based on the indication information. The transmitting apparatus does not need to send the training sequence of the transmission parameter to the receiving apparatus and wait for the receiving apparatus to complete training of a target parameter based on the training sequence. This saves more time when compared with a conventional SerDes technology in which the transmitting apparatus does not receive a feedback from the receiving apparatus to adjust the transmission parameter In this way, adjustment of the equalization, the skew, and the amplitude of the serial data signal is quickly implemented on the receiving apparatus side in a SerDes circuit, and a time required for adjusting the transmission parameter is reduced.

In a possible implementation, the serial data signal is a differential pair of signals, the transmission parameter includes the skew, and the indication information indicates to increase or decrease a latency of one signal in the serial data signal. In this case, the indication information may be transmitted by using one parameter. The transmitting apparatus may increase or decrease a latency level of one signal in the serial data signal based on the indication information.

In a possible implementation, the indication information further indicates an adjustment amount by which the latency is to be increased or decreased. In this case, the indication information may be transmitted by using two parameters, of which one parameter indicates to increase or decrease a latency of one signal in the serial data signal, and the other parameter indicates an adjustment amount by which the latency is to be increased or decreased. The transmitting apparatus may directly increase or decrease the latency of the signal in the serial data signal by the adjustment amount based on the indication information.

In a possible implementation, the transmission parameter includes the equalization, and the indication information indicates to increase or decrease the equalization of the serial data signal. In this case, the indication information may be transmitted by using one parameter. The transmitting apparatus may increase or decrease an equalization level of one signal in the serial data signal based on the indication information.

In a possible implementation, the indication information further indicates an adjustment amount by which the equalization is to be increased or decreased. In this case, the indication information may be transmitted by using two parameters, of which one parameter indicates to increase or decrease the equalization of the serial data signal, and the other parameter indicates an adjustment amount by which the equalization is to be increased or decreased. The transmitting apparatus may directly increase or decrease an equalization of one signal in the serial data signal by the adjustment amount based on the indication information.

In a possible implementation, the serial data signal is the differential pair of signals, the transmission parameter includes the amplitude, and the indication information indicates to increase or decrease an amplitude of one signal in the serial data signal. In this case, the indication information may be transmitted by using one parameter. The transmitting apparatus may increase or decrease an amplitude level of one signal in the serial data signal based on the indication information.

In a possible implementation, the indication information further indicates an adjustment amount by which the amplitude is to be increased or decreased. In this case, the indication information may be transmitted by using two parameters, of which one parameter indicates to increase or decrease an amplitude of one signal in the serial data signal, and the other parameter indicates an adjustment amount by which the amplitude is to be increased or decreased. The transmitting apparatus may directly increase or decrease the amplitude of the signal in the serial data signal by the adjustment amount based on the indication information.

In a possible implementation, the indication information is transmitted through an auxiliary channel between the transmitting apparatus and the receiving apparatus. That is, the auxiliary channel is used for bidirectional transmission. The transmitting apparatus may send configuration information to the receiving apparatus through the auxiliary channel, and the receiving apparatus may also send indication information to the transmitting apparatus through the auxiliary channel to indicate the transmitting apparatus to adjust a target parameter.

In a possible implementation, the adjustment circuit is further configured to send configuration information to the receiving apparatus through the auxiliary channel between the transmitting apparatus and the receiving apparatus. The configuration information indicates that the serial data signal carries the training sequence or the valid data. The receiving apparatus receives the training sequence or the valid data based on the configuration information, to perform a skew training procedure, an equalization training procedure, and an amplitude adjustment procedure.

In a possible implementation, the serial data signal carries the training sequence or the valid data based on a preset time sequence. The preset time sequence is known to both the transmitting apparatus and the receiving apparatus, so that the receiving apparatus can receive the training sequence or the valid data based on the preset time sequence, to perform the skew training procedure, the equalization training procedure, and the amplitude adjustment procedure.

According to a second aspect, a receiving apparatus is provided, including a training circuit, a detection circuit, and a control circuit. The training circuit is configured to: receive a serial data signal from a transmitting apparatus, and train a skew or an equalization of the serial data signal based on a training sequence carried in the serial data signal. The detection circuit is configured to: receive the serial data signal from the transmitting apparatus, and detect whether an amplitude of the serial data signal carrying valid data meets a requirement; or detect whether the trained skew or the trained equalization meets a requirement; and if a transmission parameter of the serial data signal does not meet the requirement, obtain detection information of the transmission parameter, where the transmission parameter includes at least one of the skew, the equalization, or the amplitude of the serial data signal. The control circuit is configured to: generate indication information based on the detection information, and send the indication information to the transmitting apparatus, where the indication information indicates the transmitting apparatus to adjust the transmission parameter.

According to the receiving apparatus provided in this embodiment of this application, the receiving apparatus receives a serial data signal from the transmitting apparatus. The serial data signal may carry a training sequence or valid data. The training sequence may be used to train a skew or an equalization of the serial data signal, and the valid data may be used to detect an amplitude of the serial data signal. The receiving apparatus detects whether the trained skew or the trained equalization meets a requirement, or detects whether the amplitude of the serial data signal meets a requirement; and if the requirement is not met, sends indication information to the transmitting apparatus, to indicate the transmitting apparatus to adjust a transmission parameter (including at least one of the skew, the equalization, and the amplitude of the serial data signal). This saves more time when compared with a conventional SerDes technology in which the receiving apparatus simply trains the transmission parameter based on the training sequence, without providing a feedback on how to adjust the transmission parameter. In this way, adjustment of the equalization, the skew, and the amplitude of the serial data signal is quickly implemented on the receiving apparatus side in a SerDes circuit, and a time required for adjusting the transmission parameter is reduced.

In a possible implementation, the transmission parameter is the skew, the detection information of the transmission parameter is detection information of the skew, the serial data signal is differential signals including a first signal and a second signal, and the detection circuit includes a first sampling circuit, a comparator, and a second sampling circuit. The first sampling circuit is configured to sample each of the first signal and the second signal. The comparator is configured to compare the sampled first signal with the sampled second signal, to output a comparison result to the second sampling circuit. The second sampling circuit is configured to sample the comparison result, to obtain the detection information of the skew. This structure is used to implement a manner of obtaining the detection information of the skew of the serial data signal when the trained skew of the serial data signal does not meet a requirement.

In a possible implementation, the first sampling circuit includes a first signal generator, a second signal generator, a first switch, and a second switch. The first signal is input to a non-inverting input terminal of the comparator through the first switch, and the second signal is input to an inverting input terminal of the comparator through the second switch. The first signal generator is configured to generate a first pulse at a moment at which the second signal crosses a median line, where the first pulse is used to control the first switch to be turned on, to sample the first signal. The second signal generator is configured to generate a second pulse at a moment at which the first signal crosses a median line, where the second pulse is used to control the second switch to be turned on, to sample the second signal. A median line of a signal is an average value of a maximum amplitude value and a minimum amplitude value of the signal. A moment at which a signal crosses a median line is a time at which the signal crosses the median line in a rising or falling process.

In a possible implementation, the second sampling circuit is a flip-flop, and the second signal generator is further configured to generate a frequency division signal of the first signal, where the frequency division signal is used to be input to a clock end of the flip-flop. In this case, the frequency division signal may be used as a clock of the flip-flop. The flip-flop may be a D flip-flop, an RS flip-flop, or the like.

In a possible implementation, if a sampling voltage of the first signal is higher than a sampling voltage of the second signal, the indication information indicates to increase a latency of the first signal or decrease a latency of the second signal; or if a sampling voltage of the first signal is lower than a sampling voltage of the second signal, the indication information indicates to increase a latency of the second signal or decrease a latency of the first signal. In this case, the indication information may be transmitted by using one parameter The transmitting apparatus increases or decreases a latency level of one signal in the serial data signal based on the indication information.

In a possible implementation, the indication information further indicates an adjustment amount by which the latency is to be increased or decreased. In this case, the indication information may be transmitted by using two parameters, of which one parameter indicates to increase or decrease a latency of one signal in the serial data signal, and the other parameter indicates an adjustment amount by which the latency is to be increased or decreased. The transmitting apparatus directly increases or decreases the latency of the signal in the serial data signal by the adjustment amount based on the indication information.

In a possible implementation, the transmission parameter includes the equalization, and the indication information indicates to increase or decrease the equalization of the serial data signal. In this case, the indication information may be transmitted by using one parameter. The transmitting apparatus increases or decreases an equalization level of one signal in the serial data signal based on the indication information.

In a possible implementation, the indication information further indicates an adjustment amount by which the equalization is to be increased or decreased. In this case, the indication information may be transmitted by using two parameters, of which one parameter indicates to increase or decrease the equalization of the serial data signal, and the other parameter indicates an adjustment amount by which the equalization is to be increased or decreased. The transmitting apparatus directly increases or decreases an equalization of one signal in the serial data signal by the adjustment amount based on the indication information.

In a possible implementation, the serial data signal is the differential pair of signals, the transmission parameter includes the amplitude, and the indication information indicates to increase or decrease an amplitude of one signal in the serial data signal. In this case, the indication information may be transmitted by using one parameter. The transmitting apparatus increases or decreases an amplitude level of one signal in the serial data signal based on the indication information.

In a possible implementation, the indication information further indicates an adjustment amount by which the amplitude is to be increased or decreased. In this case, the indication information may be transmitted by using two parameters, of which one parameter indicates to increase or decrease an amplitude of one signal in the serial data signal, and the other parameter indicates an adjustment amount by which the amplitude is to be increased or decreased. The transmitting apparatus directly increases or decreases the amplitude of the signal in the serial data signal by the adjustment amount based on the indication information.

In a possible implementation, the indication information is transmitted through an auxiliary channel between the transmitting apparatus and the receiving apparatus. That is, the auxiliary channel is used for bidirectional transmission. The transmitting apparatus may send configuration information to the receiving apparatus through the auxiliary channel, and the receiving apparatus may also send indication information to the transmitting apparatus through the auxiliary channel to indicate the transmitting apparatus to adjust a target parameter.

In a possible implementation, the control circuit is further configured to receive configuration information from the transmitting apparatus through the auxiliary channel between the transmitting apparatus and the receiving apparatus, and the configuration information indicates that the serial data signal carries the training sequence or the valid data. The receiving apparatus may receive the training sequence or the valid data based on the configuration information, to perform a skew training procedure, an equalization training procedure, and an amplitude adjustment procedure.

In a possible implementation, the serial data signal carries the training sequence or the valid data based on a preset time sequence. The preset time sequence is known to both the transmitting apparatus and the receiving apparatus. The receiving apparatus may receive the training sequence or the valid data based on the preset time sequence, to perform the skew training procedure, the equalization training procedure, and the amplitude adjustment procedure.

According to a third aspect, a parameter adjustment method is provided, including: sending, to a receiving apparatus, a serial data signal that carries a training sequence or valid data, where the training sequence is used to train a skew or an equalization of the serial data signal, and the valid data is used to detect an amplitude of the serial data signal; and receiving indication information from the receiving apparatus, and adjusting a transmission parameter of the serial data signal based on the indication information, where the transmission parameter includes at least one of the skew, the equalization, or the amplitude of the serial data signal.

In a possible implementation, the serial data signal is a differential pair of signals, the transmission parameter includes the skew, and the indication information indicates to increase or decrease a latency of one signal in the serial data signal.

In a possible implementation, the indication information further indicates an adjustment amount by which the latency is to be increased or decreased.

In a possible implementation, the transmission parameter includes the equalization, and the indication information indicates to increase or decrease the equalization of the serial data signal.

In a possible implementation, the indication information further indicates an adjustment amount by which the equalization is to be increased or decreased.

In a possible implementation, the serial data signal is the differential pair of signals, the transmission parameter includes the amplitude, and the indication information indicates to increase or decrease an amplitude of one signal in the serial data signal.

In a possible implementation, the indication information further indicates an adjustment amount by which the amplitude is to be increased or decreased.

In a possible implementation, the indication information is transmitted through an auxiliary channel between the transmitting apparatus and the receiving apparatus.

In a possible implementation, the method further includes: sending configuration information to the receiving apparatus through the auxiliary channel between the transmitting apparatus and the receiving apparatus, where the configuration information indicates that the serial data signal carries the training sequence or the valid data.

In a possible implementation, the serial data signal carries the training sequence or the valid data based on a preset time sequence.

According to a fourth aspect, a parameter adjustment method is provided, including: receiving a serial data signal from a transmitting apparatus, and training a skew or an equalization of the serial data signal based on a training sequence carried in the serial data signal; receiving the serial data signal from the transmitting apparatus, and detecting whether an amplitude of the serial data signal carrying valid data meets a requirement; or detecting whether the trained skew or the trained equalization meets a requirement; if a transmission parameter of the serial data signal does not meet the requirement, obtaining detection information of the transmission parameter, where the transmission parameter includes at least one of the skew, the equalization, or the amplitude of the serial data signal; and generating indication information based on the detection information, and sending the indication information to the transmitting apparatus, where the indication information indicates the transmitting apparatus to adjust the transmission parameter.

In a possible implementation, the transmission parameter is the skew, the detection information of the transmission parameter is detection information of the skew, the serial data signal is differential signals including a first signal and a second signal, and the obtaining detection information of the transmission parameter includes: sampling each of the first signal and the second signal, comparing the sampled first signal with the sampled second signal, to output a comparison result, and sampling the comparison result, to obtain the detection information of the skew.

In a possible implementation, the sampling each of the first signal and the second signal includes: generating a first pulse at a moment at which the second signal crosses a median line, where the first pulse is used to control a first switch to be turned on, to sample the first signal; and generating a second pulse at a moment at which the first signal crosses a median line, where the second pulse is used to control a second switch to be turned on, to sample the second signal.

In a possible implementation, if a sampling voltage of the first signal is higher than a sampling voltage of the second signal, the indication information indicates to increase a latency of the first signal or decrease a latency of the second signal; or if a sampling voltage of the first signal is lower than a sampling voltage of the second signal, the indication information indicates to increase a latency of the second signal or decrease a latency of the first signal.

In a possible implementation, the indication information further indicates an adjustment amount by which the latency is to be increased or decreased.

In a possible implementation, the transmission parameter includes the equalization, and the indication information indicates to increase or decrease the equalization of the serial data signal.

In a possible implementation, the indication information further indicates an adjustment amount by which the equalization is to be increased or decreased.

In a possible implementation, the serial data signal is the differential pair of signals, the transmission parameter includes the amplitude, and the indication information indicates to increase or decrease an amplitude of one signal in the serial data signal.

In a possible implementation, the indication information further indicates an adjustment amount by which the amplitude is to be increased or decreased.

In a possible implementation, the indication information is transmitted through an auxiliary channel between the transmitting apparatus and the receiving apparatus.

In a possible implementation, configuration information is received from the transmitting apparatus through the auxiliary channel between the transmitting apparatus and the receiving apparatus, where the configuration information is used to indicate that the serial data signal carries the training sequence or the valid data.

In a possible implementation, the serial data signal carries the training sequence or the valid data based on a preset time sequence.

According to a fifth aspect, a serializer/deserializer circuit is provided, including the transmitting apparatus according to any one of the first aspect and the implementations of the first aspect and the receiving apparatus according to any one of the second aspect and the implementation of the second aspects.

According to a sixth aspect, an electronic device is provided, including the transmitting apparatus according to any one of the first aspect and the implementations of the first aspect, and/or the receiving apparatus according to any one of the second aspect and the implementations of the second aspect.

For technical effects of the third aspect to the sixth aspect, refer to technical effects of any one of the first aspect and the implementations of the first aspect and technical effects of any one of the second aspect and the implementations of the second aspect.

### BRIEF DESCRIPTION OF DRAWINGS

FIG. 1 is a schematic diagram of a structure of an electronic device according to an embodiment of this application;
FIG. 2 is a schematic diagram of a structure of a SerDes circuit according to an embodiment of this application;
FIG. 3 is a schematic flowchart of a working process of a SerDes circuit according to an embodiment of this application;
FIG. 4 is a schematic diagram of a structure of a skew detection circuit according to an embodiment of this application;
FIG. 5 is a schematic diagram of a structure of another skew detection circuit according to an embodiment of this application; and
FIG. 6 is a schematic diagram of a time sequence of skew detection according to an embodiment of this application.

### DESCRIPTION OF EMBODIMENTS

Terms such as "component", "module", and "system" used in this application are used to indicate computer-related entities. The computer-related entities may be hardware, firmware, a combination of hardware and software, software, or software in running. For example, a component may be, but is not limited to, a process running on a processor, a processor, an object, an executable file, a thread of execution, a program, and/or a computer. As an example, both a computing device and an application that runs on the computing device may be components. One or more components may reside within a process and/or a thread of execution, and a component may be located on one computer and/or distributed between two or more computers. In addition, these components may be executed from various computer-readable media that have various data structures. These components may communicate with each other through a local and/or remote process based on, for example, a signal having one or more data packets (for example, data from one component, where the component interacts with another component in a local system or a distributed system, and/or interacts with another system via a network such as the Internet by using a signal).

It should be understood that in this application, "at least one (item)" means one or more and "a plurality of" means two or more. The term "and/or" is used for describing an association relationship between associated objects, and represents that three relationships may exist. For example, "A and/or B" may indicate the following three cases: Only A exists, only B exists, and both A and B exist, where A and B may be singular or plural. A character "/" usually indicates an "or" relationship between associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural.

First, some concepts in this application are described.

An electronic device provided in embodiments of this application may be a terminal such as a mobile phone (mobile phone), a tablet computer (pad), or the like, may be a lightweight device having a relatively simple function, or may be a device having a wireless transceiver function, and may be deployed on land, including an indoor device or an outdoor device, a handheld device, a wearable device, or a vehicle-mounted device, may be deployed on water (for example, on a ship, or the like), or may be deployed in the air (for example, on an airplane, a balloon, a satellite or the like). Alternatively, the electronic device may be a computer having a wireless transceiver function, virtual reality (virtual reality, VR) user equipment, augmented reality (augmented reality, AR) user equipment, a wireless terminal in industrial control (industrial control), vehicle-mounted user equipment, a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), wearable user equipment, or the like. An application scenario is not limited in embodiments of this application. Alternatively, the electronic device may be access user equipment, a vehicle-mounted terminal, an industrial control terminal, a mobile station, a mobile console, a remote station, remote user equipment, a mobile device, user equipment (user equipment), a wireless communication device, a terminal device, or the like. The electronic device may be fixed or mobile.

A chip provided in embodiments of this application may include a memory chip, a baseband chip, a Bluetooth chip, a processor, a central processing unit (central processing unit, CPU), a micro controller unit (micro controller unit, MCU), an application-specific integrated circuit (application-specific integrated circuit, ASIC), a field programmable gate array (field programmable gate array, FPGA), a system on chip (system on chip, SoC), a network processor (network processor, NP), a digital signal processing circuit (digital signal processor, DSP), a graphics processing unit (graphics processing unit, GPU), or an artificial intelligence (artificial intelligence, AI) chip, or may be a programmable controller (programmable logic device, PLD) or another integrated chip.

SerDes: A SerDes technology is a point-to-point serial communication technology using time division multiplexing, and may be applied to communication between chips (for example, communication between a GPU and a CPU), or may be applied to communication between devices (for example, communication between a set-top box and a television). A transmitting apparatus converts parallel data into a serial data signal and sends the serial data signal to a receiving apparatus. The receiving apparatus converts the received serial data signal into the parallel data. A path through which the serial data signal travels from the transmitting apparatus to the receiving apparatus is referred to as a channel (channel). The path may include elements or structures such as a chip package, a printed circuit board (printed circuit board, PCB) trace, a via, a cable, a connector, and the like.

A SerDes is not provided with a separate clock line, and a clock signal is embedded in a transition edge of the serial data signal. In addition, to mitigate impact of noise on serial data transmission, the serial data signal is designed as a differential pair of signals. Different from transmission of data 0 or 1 based on a high level or a low level of one signal during transmission of serial data by using the signal, transmission of data 0 or 1 is implemented by using differential signals, to be specific, based on whether a difference between the two signals is a high level or a low level. When the receiving apparatus receives the serial data signal, a clock data recovery (clock data recovery, CDR) circuit of the receiving apparatus captures a frequency of the transition edge of the serial data signal, to recover the clock signal. If there is no data transition for a long time, the CDR circuit cannot be precisely trained, and a sampling moment for CDR drifts. Consequently, more values of "0" or " 1" may be sampled than those in actual data. Therefore, when sending serial data, the transmitting apparatus may avoid excessively long consecutive values of "0" or "1" in the serial data through coding or scrambling, so that a transition edge can appear quickly.

It takes a relatively long time for the receiving apparatus to recover the clock signal embedded in the transition edge of the serial data signal. To accelerate a process of recovering the clock signal, before sending valid data by using the serial data signal, the transmitting apparatus may send, according to a protocol, a training sequence in a specific format by using the serial data signal, so that the CDR circuit of the receiving apparatus can quickly recover the clock signal based on the training sequence. When serial data is subsequently received, the CDR circuit may lock a transition edge of the serial data to continuously output a clock signal. That is, the serial data signal may include the training sequence or the valid data. For example, for a VBO (V-By-One) protocol-based SerDes circuit, the transmitting apparatus sends a training sequence for a clock signal to the receiving apparatus, and the receiving apparatus recovers the clock signal based on the training sequence. In this way, a clock frequency and a phase of the receiving apparatus reach predetermined values, so that CDR is quickly implemented and a time for clock recovery is reduced.

After the clock signal is recovered, the receiving apparatus aligns the recovered clock signal with the transition edge of the serial data, then samples the serial data in the midst of the transition edge, implements analog-to-digital conversion on the serial data to obtain serial data in a digital form, and then performs serial-to-parallel conversion on the serial data in the digital form to obtain parallel data in the digital form.

Equalization (equalization, EQ): Intersymbol interference is caused to the serial data signal due to non-ideality of the channel between the transmitting apparatus and the receiving apparatus. Equalization is used to compensate for, at the transmitting apparatus or the receiving apparatus, the non-ideality of the channel to eliminate the intersymbol interference.

Skew (skew): The skew is a time difference between the two signals in the serial data signal (the differential pair of signals).

Amplitude: The amplitude is an amplitude of each of the two signals in the serial data signal.

In a high-speed application scenario of the SerDes, the receiving apparatus needs to perform CDR. If a skew between the two signals in the serial data signal is relatively high, overall performance of a system is affected. Therefore, the transmitting apparatus and the receiving apparatus need to perform skew correction to improve the performance. In addition, an amplitude and an equalization of the serial data signal need to be dynamically adjusted, to improve electromagnetic interference (electromagnetic interference, EMI) performance of the channel and reduce power consumption.

However, for the foregoing VBO protocol-based SerDes circuit, only CDR of the receiving apparatus can be implemented. If link attenuation is high, a training time may be relatively long or the training may fail. In addition, according to USB 3.X protocols, the transmitting apparatus may send a training sequence equalizer (training sequence equalizer, TSEQ) code to perform coarse adjustment and fine adjustment on an equalization of the receiving apparatus. According to the high-speed serial computer extension bus standard (peripheral component interconnect express, PCIE) 3, the transmitting apparatus may perform coarse adjustment and fine adjustment on the equalization of the receiving apparatus by sending a training sequence (training sequence, TS) 1/2 code. However, in these solutions, a training time is long, training precision is low, and skew correction cannot be performed. Therefore, link performance is degraded.

That is, in a conventional SerDes technology, in a process in which the transmitting apparatus and the receiving apparatus adjust a transmission parameter of a serial data signal, the transmitting apparatus sends a training sequence to the receiving apparatus, the receiving apparatus slowly trains the transmission parameter based on the training sequence, and the receiving apparatus does not provide, to the transmitting apparatus, a feedback on how to adjust the transmission parameter. Therefore, a time required for adjusting the transmission parameter is relatively long, and link performance is degraded.

In view of this, embodiments of this application provide a transmitting apparatus, a receiving apparatus, a parameter adjustment method, a SerDes circuit, and an electronic device. The transmitting apparatus sends a serial data signal to the receiving apparatus. The receiving apparatus detects whether a transmission parameter (including at least one of skew, equalization, or amplitude of the serial data signal) of the serial data signal meets a requirement, and if the transmission parameter does not meet the requirement, sends indication information to the transmitting apparatus to indicate to adjust the transmission parameter This saves more time when compared with a case in which the transmission parameter is simply trained based on a training sequence and no feedback on how to adjust the transmission parameter is provided. Therefore, adjustment of the equalization, the skew, and the amplitude of the serial data signal is quickly implemented on the receiving apparatus side in a SerDes circuit, and a time required for adjusting the transmission parameter is reduced.

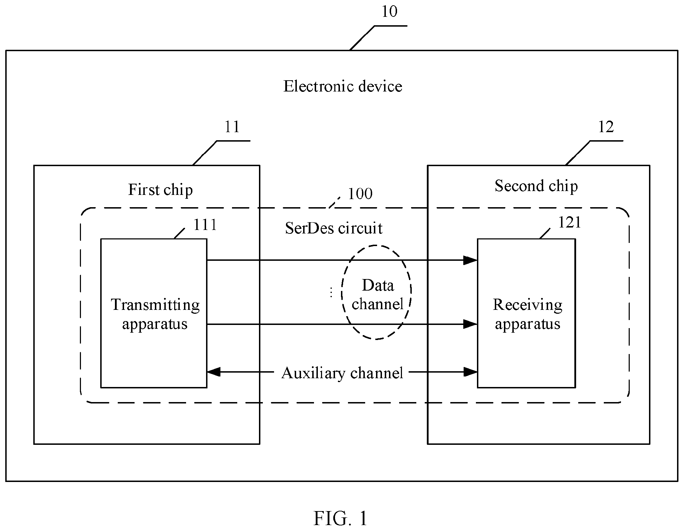

As shown in FIG. 1, an embodiment of this application provides an electronic device 10, including a SerDes circuit 100. The SerDes circuit 100 includes a transmitting apparatus 111 and a receiving apparatus 121. The transmitting apparatus 111 may be located in a first chip 11, and the receiving apparatus may be located in a second chip 12. In this case, the SerDes circuit may transmit a serial data signal from the first chip 11 to the second chip 12, for example, may transmit image data or video data from a GPU to a CPU.

The transmitting apparatus 111 may transmit a plurality of serial data signals to the receiving apparatus 121 through a data channel. The transmitting apparatus 111 may further transmit configuration information (which, for example, indicates that the serial data signal carries a training sequence or valid data) to the receiving apparatus 121 through an auxiliary channel. The receiving apparatus 121 may transmit indication information to the transmitting apparatus through the auxiliary channel, to indicate to adjust a transmission parameter.

The data channel is used for unidirectional transmission and may transmit a plurality of serial data signals and implement high-speed data transmission, and usually uses an encoding scheme such as 8b/10b or 64/66b. The auxiliary channel is used for bidirectional transmission of low-speed signals, and usually uses an encoding scheme such as Manchester coding.

It should be noted that this application is described by using an example in which the transmitting apparatus and the receiving apparatus that use the SerDes technology are located in a same electronic device. However, this application is not limited thereto. The transmitting apparatus and the receiving apparatus may also be located in different electronic devices. For example, the transmitting apparatus may be located in a set-top box, and the receiving apparatus may be located in a television, so that the set-top box can transmit a video signal to the television.

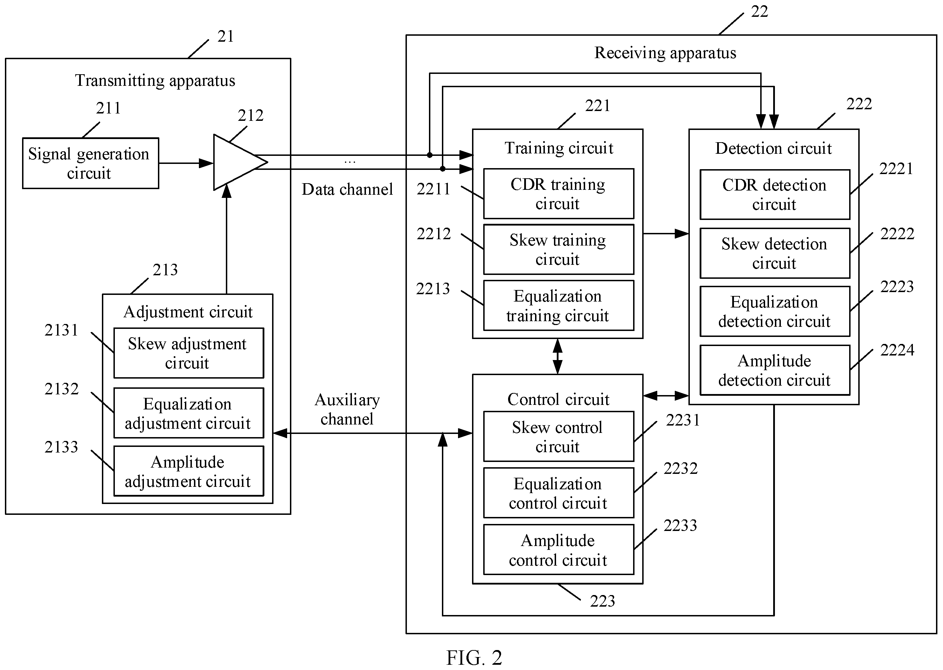

As shown in FIG. 2, a transmitting apparatus 21 includes a signal generation circuit 211, a driver 212, and an adjustment circuit 213. The adjustment circuit includes a skew adjustment circuit 2131, an equalization adjustment circuit 2132, and an amplitude adjustment circuit 2133. A receiving apparatus 22 includes a training circuit 221, a detection circuit 222, and a control circuit 223. The training circuit 221 includes a CDR training circuit 2211, a skew training circuit 2212, and an equalization training circuit 2213. The detection circuit 222 includes a CDR detection circuit 2221, a skew detection circuit 2222, an equalization detection circuit 2223, and an amplitude detection circuit 2224. The control circuit 223 includes a skew control circuit 2231, an equalization control circuit 2232, and an amplitude control circuit 2233.

The transmitting apparatus 21 transmits a serial data signal to the receiving apparatus 22 through a data channel. The serial data signal is a differential pair of signals, and may carry a training sequence or valid data. The training sequence carried in the serial data signal may be used by the receiving apparatus 22 to train CDR, an equalization, and a skew of the serial data signal, and different training sequences may be used for the CDR, the equalization, and the skew of the serial data signal. An amplitude of the serial data signal can be adjusted without using a training sequence, and the amplitude of the serial data signal can be adjusted based on the valid data, that is, the transmitting apparatus 21 sends the serial data signal carrying the valid data.

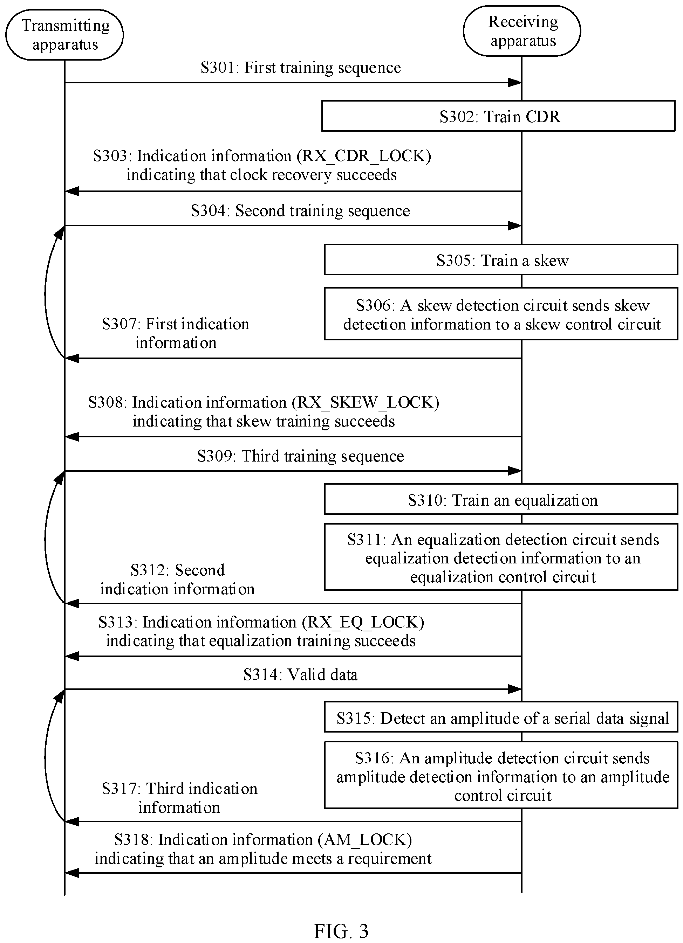

It should be noted that the serial data signal sent by the transmitting apparatus 21 may carry the training sequence or the valid data based on a preset time sequence, and the receiving apparatus 22 may receive the training sequence or the valid data based on the preset time sequence, to perform a CDR procedure, a skew training procedure, an equalization training procedure, and an amplitude adjustment procedure in FIG. 3. Alternatively, the transmitting apparatus 21 may send configuration information to the receiving apparatus 22 through an auxiliary channel. The configuration information indicates that the serial data signal carries the training sequence or the valid data. The receiving apparatus 22 may receive the training sequence or the valid data based on the configuration information, to perform the CDR procedure, the skew training procedure, the equalization training procedure, and the amplitude adjustment procedure in FIG. 3.

After receiving the serial data signal, the receiving apparatus 22 may detect whether the CDR and a transmission parameter of the serial data signal meet a requirement, and if the CDR does not meet the requirement, continue to perform training. If the transmission parameter does not meet the requirement, indication information is sent to the transmitting apparatus 21 through the auxiliary channel, to indicate how to adjust the transmission parameter. Particularly, for at least one of the skew or the equalization, included in the transmission parameter, of the serial data signal, the receiving apparatus 22 may train the transmission parameter based on a training sequence corresponding to the transmission parameter If the trained transmission parameter does not meet the requirement, indication information is sent to the transmitting apparatus 21 through the auxiliary channel, to indicate the transmitting apparatus to adjust the transmission parameter. If the transmission parameter (or the CDR) meets the requirement, the receiving apparatus 22 may send, to the transmitting apparatus 21 through the auxiliary channel, indication information indicating that the transmission parameter (or the CDR) meets the requirement.

The following describes specific functions of the foregoing circuits.

Signal generation circuit 211: configured to send, to the receiving apparatus 22, a serial data signal that carries a training sequence or valid data. The valid data may be used by the receiving apparatus 22 to detect an amplitude of the serial data signal. For the training sequence, different training code patterns may be selected for different parameters (CDR, skew, or equalization) of the serial data signal to be trained. For example, a first training sequence (for example, a pattern 1 (pattern 1) training sequence) may be used for CDR training, a second training sequence (for example, a pattern 2 (pattern 2) training sequence) may be used for skew training, and a third training sequence (for example, a pseudo random binary sequence (pseudo random binary sequence, PRBS), including PRBS7, PRBS9, PRBS11, PRBS15, PRBS31, and the like) may be used for equalization training.

Driver 212: configured to drive a data channel to send the serial data signal to the receiving apparatus 22. The training sequence or the valid data carried in the serial data signal is from the signal generation circuit 211.

Training circuit 221: When the transmitting apparatus 21 sends configuration information to the receiving apparatus 22 through an auxiliary channel, to indicate to send the training sequence, the training circuit 221 receives the serial data signal from the transmitting apparatus 21. In this case, the serial data signal carries the training sequence, and the training circuit 221 trains the CDR, the skew, or the equalization of the serial data signal based on the training sequence.

The CDR training circuit 2211 is configured to train the CDR based on a training sequence corresponding to the CDR. The skew training circuit 2212 is configured to train the skew of the serial data signal based on a training sequence corresponding to the skew of the serial data signal. The equalization training circuit 2213 is configured to train the equalization of the serial data signal based on a training sequence corresponding to the equalization of the serial data signal, for example, adjust a parameter setting of a continuous time linear equalizer (continuous time linear equalizer, CTLE).

Detection circuit 222: When the serial data signal carries the training sequence, the detection circuit 222 is configured to detect whether CDR, a skew, or an equalization of the serial data signal that has been trained by the training circuit 221 (that is, a training result) meets a requirement. Alternatively, when the serial data signal carries the valid data, the detection circuit 222 is configured to receive the serial data signal from the transmitting apparatus 21, and the detection circuit 222 detects whether the amplitude of the serial data signal that carries the valid data meets a requirement. The detection circuit 222 is further configured to: when the transmission parameter does not meet a requirement, send detection information of the transmission parameter to the control circuit 223; or when the transmission parameter meets a requirement, send, to the transmitting apparatus 21 through the auxiliary channel, indication information indicating that the transmission parameter meets the requirement.

The CDR detection circuit 2221 is configured to detect whether a clock recovery result of the CDR training circuit 2211 meets a requirement, and if the clock recovery result meets the requirement, send, to the transmitting apparatus 21 through the auxiliary channel, indication information (RX_CDR_LOCK) indicating that clock recovery succeeds. That the CDR meets the requirement means that the receiving apparatus locks a clock of the serial data signal.

The skew detection circuit 2222 is configured to detect whether the skew of the serial data signal that has been trained by the skew training circuit 2212 meets a requirement; and if the skew meets the requirement, send, to the transmitting apparatus 21 through the auxiliary channel, indication information (RX_SKEW_LOCK) indicating that skew training succeeds; or if the skew does not meet the requirement (that is, the skew still needs to be adjusted), send detection information of the skew (which is briefly referred to as skew detection information, and includes, for example, a specific skew value) to the skew control circuit 2231. That the skew meets the requirement means that the skew of the serial data signal is lower than a skew threshold; otherwise, the skew does not meet the requirement.

The equalization detection circuit 2223 is configured to: detect whether the equalization that has been trained by the equalization training circuit 2213 meets a requirement; and if the equalization meets the requirement, send, to the transmitting apparatus 21 through the auxiliary channel, indication information (RX_EQ_LOCK) indicating that equalization training succeeds; or if the equalization does not meet the requirement (that is, the equalization still needs to be adjusted), send detection information of the equalization (which is briefly referred to as equalization detection information, and includes amplitude values of different frequencies) to the equalization control circuit 2232. That the equalization meets the requirement means that a bit error rate of the serial data signal is less than a bit error rate threshold; otherwise, the equalization does not meet the requirement.

The amplitude detection circuit 2224 is configured to detect whether the amplitude of the serial data signal that carries the valid data meets a requirement; and if the amplitude meets the requirement, no adjustment is required; or if the amplitude does not meet the requirement, detection information of the amplitude (amplitude detection information for short, including, for example, a specific amplitude value) is sent to the amplitude control circuit 2233. That the amplitude meets the requirement means that the amplitude of the serial data signal is within a specific range; otherwise, the amplitude does not meet the requirement.

The control circuit 223 is configured to: determine, based on the detection information of the transmission parameter from the detection circuit 222, indication information indicating to adjust the transmission parameter of the serial data signal, and send the indication information to the transmitting apparatus 21 through the auxiliary channel. The control circuit 223 is further configured to receive configuration information from the adjustment circuit 213 of the transmitting apparatus 21 through the auxiliary channel, where the configuration information indicates that the serial data signal carries the training sequence or the valid data. If the configuration information indicates that the serial data signal carries the training sequence, the control circuit 223 indicates the training circuit 221 to receive the serial data signal and train the CDR, the skew, or the equalization of the serial data signal based on the training sequence, and indicates the detection circuit 222 to detect a training result of the training circuit 221. If the configuration information indicates that the serial data signal carries the valid data, the control circuit 223 indicates the detection circuit 222 to receive the serial data signal and detect the amplitude of the serial data signal.

The skew control circuit 2231 is configured to determine first indication information based on the skew detection information from the skew detection circuit 2222, and send the first indication information to the skew adjustment circuit 2131 of the transmitting apparatus 21 through the auxiliary channel. The first indication information may indicate to increase or decrease a latency of one signal in the serial data signal. In this case, the first indication information may be transmitted by using one parameter Further, the first indication information may indicate an adjustment amount by which the latency is to be increased or decreased. In this case, the first indication information may be transmitted by using two parameters, of which one parameter indicates to increase or decrease a latency of one signal in the serial data signal, and the other parameter indicates the adjustment amount by which the latency is to be increased or decreased. The equalization control circuit 2232 is configured to: determine second indication information based on the equalization detection information from the equalization detection circuit 2223, and send the second indication information to the equalization adjustment circuit 2132 of the transmitting apparatus 21 through the auxiliary channel. The second indication information may indicate to increase or decrease the equalization of the serial data signal. In this case, the first indication information may be transmitted by using one parameter. Further, the second indication information may indicate an adjustment amount by which the equalization is to be increased or decreased. In this case, the second indication information may be transmitted by using two parameters, of which one parameter indicates to increase or decrease the equalization of the serial data signal, and the other parameter indicates the adjustment amount by which the equalization is to be increased or decreased. The amplitude control circuit 2233 is configured to: determine third indication information based on the amplitude detection information from the amplitude detection circuit 2224, and send the third indication information to the amplitude adjustment circuit 2133 of the transmitting apparatus 21 through the auxiliary channel. The third indication information indicates to increase or decrease an amplitude of one signal in the serial data signal. In this case, the third indication information may be transmitted by using one parameter. Further, the third indication information may indicate an adjustment amount by which the amplitude is to be increased or decreased. In this case, the third indication information may be transmitted by using two parameters, of which one parameter indicates to increase or decrease an amplitude of one signal in the serial data signal, and the other parameter indicates an adjustment amount by which the amplitude is to be increased or decreased.

Adjustment circuit 213: configured to receive the indication information from the receiving apparatus 22 through the auxiliary channel, and adjust the transmission parameter of the serial data signal based on the indication information. The adjustment circuit 213 is further configured to send configuration information to the control circuit 223 of the receiving apparatus 22 through the auxiliary channel, where the configuration information indicates that the serial data signal carries the training sequence or the valid data.

The skew adjustment circuit 2131 is configured to adjust the skew (a time deviation between two signals) of the serial data signal based on the first indication information. For example, when the first indication information indicates to increase or decrease a latency of one signal in the serial data signal, the skew adjustment circuit 2131 may increase or decrease a latency level of the signal in the serial data signal based on the first indication information. When the first indication information further indicates an adjustment amount by which the latency is to be increased or decreased, the skew adjustment circuit 2131 may directly increase or decrease the latency of the signal in the serial data signal based on the adjustment amount based on the first indication information. The equalization adjustment circuit 2132 is configured to adjust the equalization of the serial data signal based on the second indication information, for example, adjust pre-emphasis and de-emphasis of one signal in the serial data signal based on a level. The pre-emphasis means a signal processing manner in which the transmitting apparatus compensates for a high-frequency component of the signal, and the de-emphasis means a signal processing manner in which the transmitting apparatus recovers an already-emphasized signal to an original form of the signal. For example, when the second indication information indicates to increase or decrease the equalization of the serial data signal, the equalization adjustment circuit 2132 may increase or decrease an equalization level of one signal in the serial data signal based on the second indication information. When the second indication information further indicates an adjustment amount by which the equalization is to be increased or decreased, the equalization adjustment circuit 2132 may directly increase or decrease equalization of one signal in the serial data signal by the adjustment amount based on the second indication information. The amplitude adjustment circuit 2133 is configured to adjust the amplitude of the serial data signal based on the third indication information. For example, when the third indication information indicates to increase or decrease an amplitude of one signal in the serial data signal, the amplitude adjustment circuit 2133 may increase or decrease an amplitude level of the signal in the serial data signal based on the third indication information. When the third indication information further indicates an adjustment amount by which the amplitude is to be increased or decreased, the amplitude adjustment circuit 2133 may directly increase or decrease an amplitude of one signal in the serial data signal by the adjustment amount based on the third indication information.

The following describes a working process of the foregoing SerDes circuit with reference to FIG. 3.

S301: A signal generation circuit 211 of a transmitting apparatus 21 sends, to a CDR training circuit 2211 of a receiving apparatus 22 through a driver 212, a serial data signal that carries a first training sequence.

The first training sequence is used to train CDR of the serial data signal.

S302: The CDR training circuit 2211 of the receiving apparatus 22 trains the CDR of the serial data signal based on the first training sequence.

S303: When detecting that the CDR training circuit 2211 has recovered a clock of the serial data signal to a preset rate, a CDR detection circuit 2221 of the receiving apparatus 22 sends, to the signal generation circuit 211 of the transmitting apparatus 21 through an auxiliary channel, indication information (RX_CDR_LOCK) indicating that clock recovery succeeds. That is, a CDR procedure is completed.

S304: The signal generation circuit 211 of the transmitting apparatus 21 sends, to a skew training circuit 2212 of the receiving apparatus 22 through the driver 212, a serial data signal that carries a second training sequence.

The second training sequence is used to train a skew of the serial data signal.

S305: The skew training circuit 2212 of the receiving apparatus 22 trains the skew of the serial data signal based on the second training sequence.

S306: When detecting that the trained skew is greater than or equal to a skew threshold after a preset time, a skew detection circuit 2222 of the receiving apparatus 22 sends skew detection information to a skew control circuit 2231 of the receiving apparatus 22.

S307: The skew control circuit 2231 of the receiving apparatus 22 determines first indication information based on the skew detection information, and sends the first indication information to a skew adjustment circuit 2131 of the transmitting apparatus 21 through the auxiliary channel.

The skew adjustment circuit 2131 of the transmitting apparatus 21 adjusts a skew of the second training sequence based on the first indication information, and the signal generation circuit 211 of the transmitting apparatus 21 sends, to the skew training circuit 2212 of the receiving apparatus 22 through the driver 212, a serial data signal that carries a new second training sequence, to perform step S304 again.

S308: When detecting that the trained skew is less than the skew threshold within a preset time, the skew detection circuit 2222 of the receiving apparatus 22 sends, to the skew adjustment circuit 2131 of the transmitting apparatus 21 through the auxiliary channel, indication information (RX_SKEW_LOCK) indicating that skew training succeeds. That is, a skew training procedure is completed.

S309: The signal generation circuit 211 of the transmitting apparatus 21 sends, to an equalization training circuit 2213 of the receiving apparatus 22 through the driver 212, a serial data signal that carries a third training sequence.

The third training sequence is used to train an equalization of the serial data signal.

S310: The equalization training circuit 2213 of the receiving apparatus 22 trains the equalization of the serial data signal based on the third training sequence.

S311: When detecting that a bit error rate is greater than or equal to a bit error rate threshold after a preset time, the equalization detection circuit 2223 of the receiving apparatus 22 sends equalization detection information to an equalization control circuit 2232 of the receiving apparatus 22.

S312: The equalization control circuit 2232 of the receiving apparatus 22 determines second indication information based on the equalization detection information, and sends the second indication information to an equalization adjustment circuit 2132 of the transmitting apparatus 21 through the auxiliary channel.

The equalization adjustment circuit 2132 of the transmitting apparatus 21 adjusts the equalization of the third training sequence based on the second indication information. The signal generation circuit 211 of the transmitting apparatus 21 sends, to the equalization training circuit 2213 of the receiving apparatus 22 through the driver 212, a serial data signal that carries a new third training sequence, to perform step S309 again.

S313: When detecting that the bit error rate is less than the bit error rate threshold within a preset time, the equalization detection circuit 2223 of the receiving apparatus 22 sends, to the equalization adjustment circuit 2132 of the transmitting apparatus 21 through the auxiliary channel, indication information (RX _EQ_LOCK) indicating that equalization training succeeds. That is, an equalization training procedure is completed.

S314: The signal generation circuit 211 of the transmitting apparatus 21 sends, to the detection circuit 222 of the receiving apparatus 22 through the driver 212, a serial data signal that carries valid data.

S315: An amplitude detection circuit 2224 of the receiving apparatus 22 detects an amplitude of the serial data signal.

S316: If the amplitude of the serial data signal does not meet a requirement, the amplitude detection circuit 2224 sends amplitude detection information to an amplitude control circuit 2232 of the receiving apparatus 22.

S317: The amplitude control circuit 2232 determines third indication information based on the amplitude detection information, and sends the third indication information to an amplitude adjustment circuit 2133 of the transmitting apparatus 21 through the auxiliary channel.

The amplitude adjustment circuit 2132 of the transmitting apparatus 21 adjusts, based on the third indication information, the amplitude of the serial data signal that carries the valid data. The signal generation circuit 211 of the transmitting apparatus 21 sends, to the receiving apparatus 22 through the driver 212, a new serial data signal that carries the valid data, to perform step S314 again.

S318: If the amplitude of the serial data signal meets the requirement (for example, the amplitude of the serial data signal is within a specific range), send, to the amplitude adjustment circuit 2133 of the transmitting apparatus 21 through the auxiliary channel, indication information (AM_LOCK) indicating that the amplitude meets the requirement.

It should be noted that an execution order of the CDR procedure, the skew training procedure, the equalization training procedure, and the amplitude adjustment procedure is not limited in this application. To be specific, an execution order of steps S301 to S303, steps S304 to S308, steps S309 to S313, and steps S314 to S318 is not limited. The execution order of these procedures may be determined based on a preset time sequence known to both the transmitting apparatus 21 and the receiving apparatus 22, or may be determined based on configuration information sent by the transmitting apparatus 21 to the receiving apparatus 22.

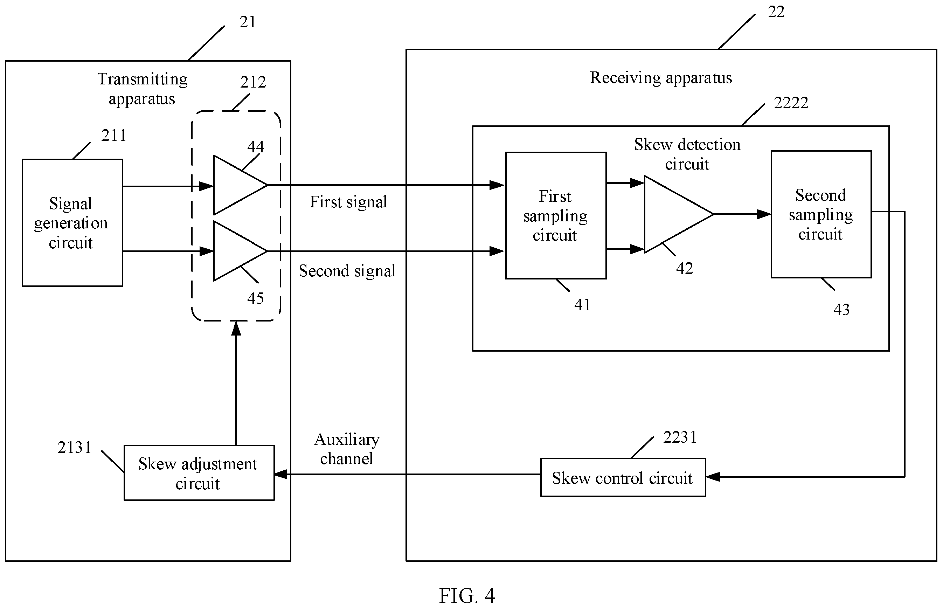

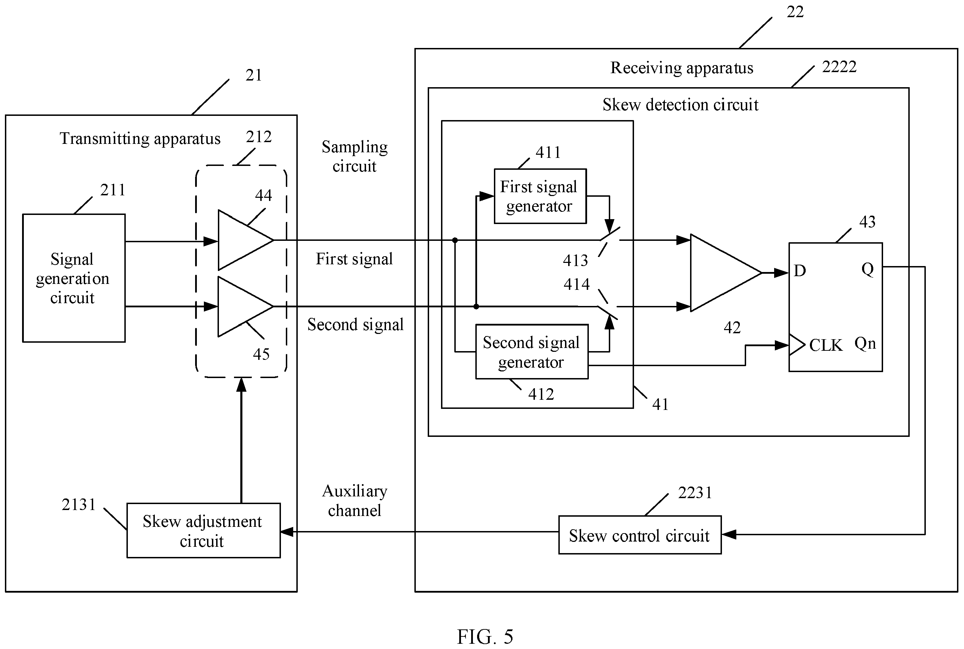

The following describes a possible structure of a skew detection circuit 2222 with reference to FIG. 4 and FIG. 5. The structure is used to implement how to obtain skew detection information of a serial data signal when a trained skew of the serial data signal does not meet a requirement.

As shown in FIG. 4, the skew detection circuit 2222 includes a first sampling circuit 41, a comparator 42, and a second sampling circuit 43. A driver 212 includes a first buffer 44 and a second buffer 45.

It is assumed that a serial data signal between a transmitting apparatus 21 and a receiving apparatus 22 includes a first signal and a second signal, the first buffer 45 is configured to output the first signal, and the second buffer 46 is configured to output the second signal. The first sampling circuit 41 may sample each of the first signal and the second signal. The comparator 42 compares the first signal with the second signal that have been sampled by the first sampling circuit 41, to output a comparison result to the second sampling circuit 43. The second sampling circuit 43 samples the comparison result output by the comparator 42 to obtain skew detection information, and sends the skew detection information to a skew control circuit 2231. In this way, the skew control circuit 2231 may output first indication information based on the skew detection information.

As shown in FIG. 5, a first sampling circuit includes a first signal generator 411, a second signal generator 412, a first switch 413, and a second switch 414. A first signal is input to a non-inverting input terminal of a comparator 42 through the first switch 413, and a second signal is input to an inverting input terminal of the comparator 42 through the second switch 414. A second sampling circuit 43 may be a flip-flop such as a D flip-flop or an RS flip-flop.

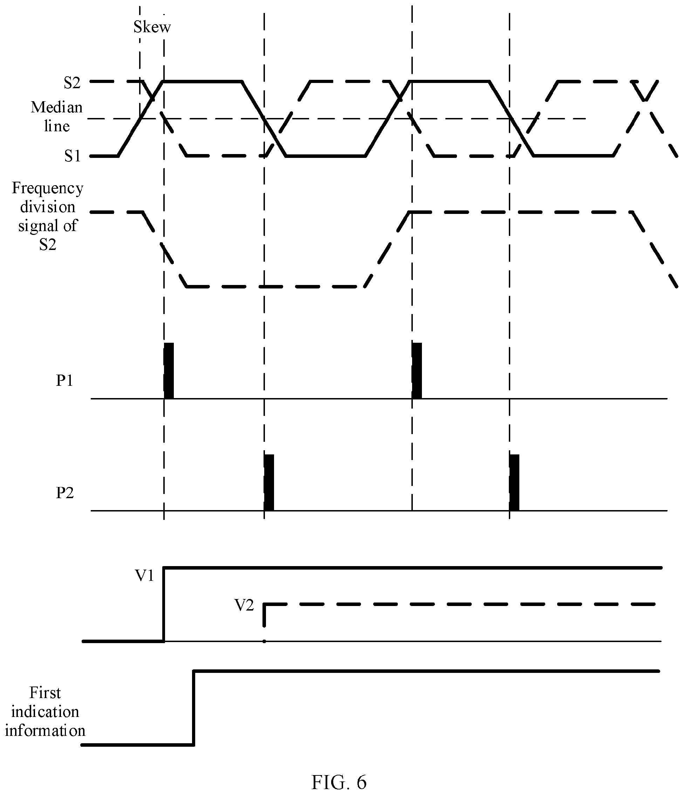

The first signal generator 411 generates a first pulse at a moment at which the second signal crosses a median line. The first pulse is used to control the first switch 413 to be turned on, to sample the first signal. For example, when the first pulse is at a high level, the first switch 413 is turned on, and when the first pulse is at a low level, the first switch 413 is turned off; or when the first pulse is at a low level, the first switch 413 is turned on, and when the first pulse is at a high level, the first switch 413 is turned off. The first signal generator 411 may further generate a frequency division signal (for example, a divide-by-two frequency signal) of the second signal. As shown in FIG. 6, a median line of a signal is an average value of a maximum amplitude value and a minimum amplitude value of the signal.

The second signal generator 412 generates a second pulse at a moment at which the first signal crosses a median line. The second pulse is used to control the second switch 414 to be turned on, to sample the second signal. The moment at which the signal crosses the median line is a time at which the signal crosses the median line in a rising or falling process. For example, when the second pulse is at a high level, the second switch 414 is turned on, and when the second pulse is at a low level, the second switch 414 is turned off. The second signal generator 412 may further generate a frequency division signal (for example, a divide-by-two frequency signal) of the first signal. The frequency division signal is used to be input to a clock end of a flip-flop 43, and is used as a clock of the flip-flop 43.

The following uses FIG. 6 as an example to describe a working principle of the skew detection circuit 2222.

As shown in FIG. 6, it is assumed that a second signal S2 (dashed line) lags behind a first signal S1 (solid line), and a skew of a serial data signal is a time deviation between the first signal S1 and the second signal S2. For a differential pair of signals, the skew may be obtained by using a time deviation of moments at which the two signals cross a median line. The first signal generator 411 generates a first pulse P1 at a moment at which the second signal S2 crosses the median line, and the first switch 413 is turned on when the first pulse P1 is at a high level, to sample the first signal S1. That is, the non-inverting input terminal of the comparator 42 inputs a sampling voltage V1 of the first signal S1. The second signal generator 412 generates a second pulse P2 at a moment at which the first signal S1 crosses the median line, and the second switch 414 is turned on when the second pulse P2 is at a high level, to sample the second signal S2. That is, the inverting input terminal of the comparator 42 inputs a sampling voltage V2 of the second signal S2.

If the second signal S2 lags behind the first signal S1, the sampling voltage V2 is lower than the sampling voltage V1, and the comparator 42 outputs a high level. On the contrary, if the second signal S2 is ahead of the first signal S1, the sampling voltage V2 is higher than the sampling voltage V1, and the comparator 42 outputs a low level.

A divide-by-two frequency signal DIV2 of the second signal S2 is used as a clock signal, and triggers the second sampling circuit 43 to sample a comparison result output by the comparator 42, to output the skew detection information to the skew control circuit 2231. If the skew detection information is a high level, that is, the sampling voltage V1 of the first signal S1 is higher than the sampling voltage V2 of the second signal S2, the first indication information output by the skew control circuit 2231 indicates to increase a latency of the first signal S1 or decrease a latency of the second signal S2, so as to reduce the skew between the first signal S1 and the second signal S2. If the skew detection information is a low level, that is, the sampling voltage V1 of the first signal S1 is lower than the sampling voltage V2 of the second signal S2, the first indication information output by the skew control circuit 2231 indicates to increase a latency of the second signal S2 or decrease a latency of the first signal S1, so as to reduce the skew between the first signal S1 and the second signal S2. The skew adjustment circuit 2131 adjusts the latency of the first signal S1 or the second signal S2 based on the first indication information.

According to the transmitting apparatus, the receiving apparatus, the parameter adjustment method, the SerDes circuit, and the electronic device provided in embodiments of this application, the transmitting apparatus sends a serial data signal to the receiving apparatus. The serial data signal may carry a training sequence or valid data. The training sequence may be used to train a skew or an equalization of the serial data signal, and the valid data may be used to detect an amplitude of the serial data signal. The receiving apparatus detects whether the trained skew or the trained equalization meets a requirement, or detects whether the amplitude of the serial data signal meets a requirement. If the requirement is met, indication information is sent to the transmitting apparatus to indicate the transmitting apparatus to adjust the transmission parameter (including at least one of the skew, the equalization, and the amplitude of the serial data signal). This saves more time when compared with a conventional SerDes technology in which a receiving apparatus simply trains a transmission parameter based on a training sequence without providing a feedback on how to adjust the transmission parameter. Therefore, adjustment of the equalization, the skew, and the amplitude of the serial data signal is quickly implemented on the receiving apparatus side in a SerDes circuit, and a time required for adjusting the transmission parameter is reduced.

It should be understood that numbers of the foregoing processes do not mean an execution order in various embodiments of this application. The execution order of the processes should be determined according to functions and internal logic of the processes, and shall not be construed as any limitation on the implementation processes of embodiments of this application.

A person of ordinary skill in the art may be aware that the example modules, algorithms, and steps described with reference to embodiments disclosed in this specification can be implemented by electronic hardware or a combination of computer software and electronic hardware. Whether the functions are performed by hardware or software depends on particular applications and design constraints of the technical solutions. A skilled person may use different methods to implement the described functions for each particular application, but it should not be considered that the implementation goes beyond the scope of this application.

It may be clearly understood by a person skilled in the art that for the purpose of convenient and brief description, for a detailed working process of the system, apparatus, and module described above, refer to the corresponding process in the foregoing method embodiments. Details are not described herein.

In several embodiments provided in this application, it should be understood that the disclosed system, device, and method may be implemented in other manners. For example, the described device embodiment is merely an example. For example, division into the modules is merely logical function division and may be other division in an actual implementation. For example, a plurality of modules or components may be combined or integrated into another device, or some features may be ignored or not performed. In addition, the displayed or discussed mutual couplings or direct couplings or communication connections may be implemented through some interfaces. The indirect couplings or communication connections between the devices or modules may be implemented in electronic, mechanical, or other forms.

The modules described as separate parts may or may not be physically separate, and parts displayed as modules may or may not be physical modules, that is, may be located at one device, or may be distributed on a plurality of devices. Some or all of the modules may be selected based on actual requirements to achieve the objectives of the solutions of embodiments.

In addition, functional modules in embodiments of this application may be integrated into one device, each of the modules may exist alone physically, or two or more modules are integrated into one device.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A transmitting apparatus, comprising a signal generation circuit and an adjustment circuit, wherein
the signal generation circuit is configured to send, to a receiving apparatus, a serial data signal that carries a training sequence or valid data, wherein the training sequence is used to train a skew or an equalization of the serial data signal, and the valid data is used to detect an amplitude of the serial data signal; and
the adjustment circuit is configured to: receive indication information from the receiving apparatus, and adjust a transmission parameter of the serial data signal based on the indication information, wherein the transmission parameter comprises at least one of the skew, the equalization, or the amplitude of the serial data signal.

2. The transmitting apparatus according to claim 1, wherein the serial data signal is a differential pair of signals, the transmission parameter comprises the skew, and the indication information indicates to increase or decrease a latency of one signal in the serial data signal.

3. The transmitting apparatus according to claim 2, wherein the indication information further indicates an adjustment amount by which the latency is to be increased or decreased.

4. The transmitting apparatus according to any one of claims 1 to 3, wherein the transmission parameter comprises the equalization, and the indication information indicates to increase or decrease the equalization of the serial data signal.

5. The transmitting apparatus according to claim 4, wherein the indication information further indicates an adjustment amount by which the equalization is to be increased or decreased.

6. The transmitting apparatus according to any one of claims 1 to 5, wherein the serial data signal is a differential pair of signals, the transmission parameter comprises the amplitude, and the indication information indicates to increase or decrease an amplitude of one signal in the serial data signal.

7. The transmitting apparatus according to claim 6, wherein the indication information further indicates an adjustment amount by which the amplitude is to be increased or decreased.

8. The transmitting apparatus according to any one of claims 1 to 7, wherein the indication information is transmitted through an auxiliary channel between the transmitting apparatus and the receiving apparatus.

9. The transmitting apparatus according to any one of claims 1 to 8, wherein the adjustment circuit is further configured to send configuration information to the receiving apparatus through the auxiliary channel between the transmitting apparatus and the receiving apparatus, and the configuration information indicates that the serial data signal carries the training sequence or the valid data.

10. The transmitting apparatus according to any one of claims 1 to 8, wherein the serial data signal carries the training sequence or the valid data based on a preset time sequence.

11. A receiving apparatus, comprising a training circuit, a detection circuit, and a control circuit, wherein
the training circuit is configured to: receive a serial data signal from a transmitting apparatus, and train a skew or an equalization of the serial data signal based on a training sequence carried in the serial data signal;
the detection circuit is configured to: receive the serial data signal from the transmitting apparatus, and detect whether an amplitude of the serial data signal carrying valid data meets a requirement; or detect whether the trained skew or the trained equalization meets a requirement; and if a transmission parameter of the serial data signal does not meet the requirement, obtain detection information of the transmission parameter, wherein the transmission parameter comprises at least one of the skew, the equalization, or the amplitude of the serial data signal; and
the control circuit is configured to: generate indication information based on the detection information, and send the indication information to the transmitting apparatus, wherein the indication information indicates the transmitting apparatus to adjust the transmission parameter.

12. The receiving apparatus according to claim 11, wherein the transmission parameter is the skew, the detection information of the transmission parameter is detection information of the skew, the serial data signal is differential signals comprising a first signal and a second signal, and the detection circuit comprises a first sampling circuit, a comparator, and a second sampling circuit;
the first sampling circuit is configured to sample each of the first signal and the second signal;
the comparator is configured to compare the sampled first signal with the sampled second signal, to output a comparison result to the second sampling circuit; and
the second sampling circuit is configured to sample the comparison result, to obtain the detection information of the skew.

13. The receiving apparatus according to claim 12, wherein the first sampling circuit comprises a first signal generator, a second signal generator, a first switch, and a second switch, the first signal is input to a non-inverting input terminal of the comparator through the first switch, and the second signal is input to an inverting input terminal of the comparator through the second switch;
the first signal generator is configured to generate a first pulse at a moment at which the second signal crosses a median line, wherein the first pulse is used to control the first switch to be turned on, to sample the first signal; and
the second signal generator is configured to generate a second pulse at a moment at which the first signal crosses the median line, wherein the second pulse is used to control the second switch to be turned on, to sample the second signal.

14. The receiving apparatus according to claim 13, wherein the second sampling circuit is a flip-flop, and the second signal generator is further configured to generate a frequency division signal of the first signal, wherein the frequency division signal is used to be input to a clock end of the flip-flop.

15. The receiving apparatus according to any one of claims 11 to 14, wherein the serial data signal is a differential pair of signals comprising the first signal and the second signal;
the transmission parameter comprises the equalization, and the indication information indicates to increase or decrease the equalization of the serial data signal; or
the transmission parameter comprises the amplitude, and the indication information indicates to increase or decrease the amplitude of one signal in the serial data signal; or
if a sampling voltage of the first signal is higher than a sampling voltage of the second signal, the indication information indicates to increase a latency of the first signal or decrease a latency of the second signal; or if a sampling voltage of the first signal is lower than a sampling voltage of the second signal, the indication information indicates to increase a latency of the second signal or decrease a latency of the first signal.

16. The receiving apparatus according to any one of claims 11 to 15, wherein the indication information is transmitted through an auxiliary channel between the transmitting apparatus and the receiving apparatus.

17. The receiving apparatus according to any one of claims 11 to 16, wherein the control circuit is further configured to receive configuration information from the transmitting apparatus through the auxiliary channel between the transmitting apparatus and the receiving apparatus, and the configuration information indicates that the serial data signal carries the training sequence or the valid data.

18. The receiving apparatus according to any one of claims 11 to 16, wherein the serial data signal carries the training sequence or the valid data based on a preset time sequence.

19. A parameter adjustment method, comprising:
sending, to a receiving apparatus, a serial data signal that carries a training sequence or valid data, wherein the training sequence is used to train a skew or an equalization of the serial data signal, and the valid data is used to detect an amplitude of the serial data signal; and
receiving indication information from the receiving apparatus, and adjusting a transmission parameter of the serial data signal based on the indication information, wherein the transmission parameter comprises at least one of the skew, the equalization, or the amplitude of the serial data signal.

20. The method according to claim 19, wherein the serial data signal is a differential pair of signals, the transmission parameter comprises the skew, and the indication information indicates to increase or decrease a latency of one signal in the serial data signal.

21. The method according to claim 20, wherein the indication information further indicates an adjustment amount by which the latency is to be increased or decreased.

22. The method according to any one of claims 19 to 21, wherein the transmission parameter comprises the equalization, and the indication information indicates to increase or decrease the equalization of the serial data signal.

23. The method according to claim 22, wherein the indication information further indicates an adjustment amount by which the equalization is to be increased or decreased.

24. The method according to any one of claims 19 to 23, wherein the serial data signal is a differential pair of signals, the transmission parameter comprises the amplitude, and the indication information indicates to increase or decrease an amplitude of one signal in the serial data signal.

25. The method according to claim 24, wherein the indication information further indicates an adjustment amount by which the amplitude is to be increased or decreased.

26. The method according to any one of claims 19 to 25, wherein the indication information is transmitted through an auxiliary channel between the transmitting apparatus and the receiving apparatus.

27. The method according to any one of claims 19 to 26, wherein the serial data signal carries the training sequence or the valid data based on a preset time sequence.

28. A parameter adjustment method, comprising:
receiving a serial data signal from a transmitting apparatus, and training a skew or an equalization of the serial data signal based on a training sequence carried in the serial data signal;
receiving the serial data signal from the transmitting apparatus, and detecting whether an amplitude of the serial data signal carrying valid data meets a requirement; or detecting whether the trained skew or the trained equalization meets a requirement; and if a transmission parameter of the serial data signal does not meet the requirement, obtaining detection information of the transmission parameter, wherein the transmission parameter comprises at least one of the skew, the equalization, or the amplitude of the serial data signal; and
generating indication information based on the detection information, and sending the indication information to the transmitting apparatus, wherein the indication information indicates the transmitting apparatus to adjust the transmission parameter

29. The method according to claim 28, wherein the transmission parameter is the skew, the detection information of the transmission parameter is detection information of the skew, the serial data signal is differential signals comprising a first signal and a second signal, and the obtaining detection information of the transmission parameter comprises:
sampling each of the first signal and the second signal;
comparing the sampled first signal with the sampled second signal, to output a comparison result; and
sampling the comparison result, to obtain the detection information of the skew.

30. The method according to claim 29, wherein the sampling each of the first signal and the second signal comprises:
generating a first pulse at a moment at which the second signal crosses a median line, wherein the first pulse is used to control a first switch to be turned on, to sample the first signal; and
generating a second pulse at a moment at which the first signal crosses a median line, wherein the second pulse is used to control a second switch to be turned on, to sample the second signal.

31. The method according to any one of claims 28 to 30, wherein the serial data signal is the differential pair of signals comprising the first signal and the second signal;
the transmission parameter comprises the equalization, and the indication information indicates to increase or decrease the equalization of the serial data signal;
the transmission parameter comprises the amplitude, and the indication information indicates to increase or decrease an amplitude of one signal in the serial data signal; or
if a sampling voltage of the first signal is higher than a sampling voltage of the second signal, the indication information indicates to increase a latency of the first signal or decrease a latency of the second signal; or if a sampling voltage of the first signal is lower than a sampling voltage of the second signal, the indication information indicates to increase a latency of the second signal or decrease a latency of the first signal.

32. The receiving apparatus according to any one of claims 28 to 31, wherein the indication information is transmitted through an auxiliary channel between the transmitting apparatus and the receiving apparatus.

33. The receiving apparatus according to any one of claims 28 to 32, wherein the serial data signal carries the training sequence or the valid data based on a preset time sequence.

34. A serializer/deserializer circuit, comprising the transmitting apparatus according to any one of claims 1 to 10 and the receiving apparatus according to any one of claims 11 to 18.

35. An electronic device, comprising the transmitting apparatus according to any one of claims 1 to 10 and/or the receiving apparatus according to any one of claims 11 to 18.
